# EUROPEAN PATENT APPLICATION

(11) **EP 2 698 956 A1**
(43) Date of publication of application: **19.02.2014**
(21) Application number: 13179694.8
(22) Date of filing: 08.08.2013
(51) Int. Cl.: H04L 12/58

(54) **Method and electronic device for synchronizing emails**

(30) Priority: 13.08.2012 KR 20120088942
(71) Applicant: Samsung Electronics Co., Ltd, Gyeonggi-do 443-742 (KR)
(72) Inventor: Kim, Jong-Yun, Gyeonggi-do (KR); Kim, Young-Kyoo, Seoul (KR); Park, Joon-Ho, Gyeonggi-do (KR)
(74) Representative: Gover, Richard Paul

(57) **Abstract**

A device and method for synchronizing emails are provided. The method includes identifying configuration information for synchronizing emails, identifying email information to be provided from an email server through email synchronization based on the configuration information, and displaying the email information.

## Description

### BACKGROUND OF THE INVENTION

### 1. Field of the Invention

The present invention relates generally to an electronic device, and more particularly, to an electronic device and method for synchronizing emails.

### 2. Description of the Related Art

A portable electronic device may provide various supplementary services such as the Internet and email as well as a voice call service to satisfy a user's needs.

When the portable electronic device provides an email service, it may periodically receive new mail for a user's account from an email server. The portable electronic device may receive emails from the email server by using a wireless resource.

When an email is received from the email server by using the wireless resource, a user of the portable electronic device may need to pay a cost according to an amount of data transmitted using the wireless resource. Accordingly, the user of the portable electronic device needs a way of clearly being able to recognize the number of emails and the amount of data that have been or are going to be provided from the email server.

### SUMMARY OF THE INVENTION

It is an aim of certain embodiments of the present invention to provide a device and method for performing email synchronization in an electronic device.

Another aim of certain embodiments of the present invention is to provide a device and method for regulating an amount of data according to email synchronization in an electronic device.

Another aim of certain embodiments of the present invention is to provide a device and method for displaying an amount of data according to email synchronization in an electronic device so that a user may recognize the amount of data.

Another aim of certain embodiments of the present invention is to provide a device and method for regulating an email synchronization charge in an electronic device.

Another aim of certain embodiments of the present invention is to provide a device and method for displaying an email synchronization charge in an electronic device so that a user may recognize the email synchronization charge.

Another aim of certain embodiments of the present invention is to provide a device and method for regulating email configuration information according to email synchronization in an electronic device.

According to a first aspect of the present invention, a method for synchronizing emails in an electronic device is provided. The method includes identifying configuration information for synchronizing the emails; identifying email information to be provided from an email server through email synchronization based on the configuration information; and displaying the email information.

According to a second aspect of the present invention there is provided an electronic device, comprising: a display unit; and a processor; wherein the processor is arranged to: identify configuration information for synchronizing emails; identify email information to be provided from an email server through email synchronization based on the configuration information; and control the display unit to display the email information.

The processor may be further arranged to implement the above described method.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram of an electronic device according to an embodiment of the present invention;
FIG. 2 is a detailed block diagram of a processor according to an embodiment of the present invention;
FIG. 3 is a flowchart for displaying email synchronization information in an electronic device according to an embodiment of the present invention;
FIG. 4 is a flowchart for displaying email synchronization information when configuring an email in an electronic device according to an embodiment of the present invention;
FIGS. 5A and 5B illustrate screens for displaying email synchronization information when configuring an email in an electronic device according to an embodiment of the present invention;
FIGS. 6A and 6B illustrate screens for displaying email synchronization information when configuring an email in an electronic device according to another embodiment of the present invention;
FIG. 7 is a flowchart for periodically displaying email synchronization information in an electronic device according to an embodiment of the present invention;
FIGS. 8A to 8C illustrate screens for periodically displaying email synchronization information in an electronic device according to an embodiment of the present invention;
FIG. 9 is a flowchart for displaying email synchronization information when a synchronization event occurs in an electronic device according to an embodiment of the present invention;
FIGS. 10A to 10D illustrate screens for displaying email synchronization information when a synchronization event occurs in an electronic device according to an embodiment of the present invention; and
FIGS. 11A and 11B illustrate screens for displaying a list of emails in an electronic device according to an embodiment of the present invention.

### DETAILED DESCRIPTION OF EMBODIMENTS OF THE PRESENT

### INVENTION

Embodiments of the present invention will be described below in more detail with reference to the accompanying drawings. Moreover, detailed descriptions related to well-known functions or configurations will be omitted in order to avoid unnecessarily obscuring the subject matter of the present invention. The terms described below are those defined by considering the functions in embodiments of the present invention and may vary depending on the intention of a user or an operator or in practice. Therefore, the definitions will be made on the basis of the content of the specification.

A technology to synchronize emails in an electronic device according to the present invention will be described below.

In the following description, the electronic device may include devices capable of synchronizing emails from an email server, such as a portable electronic device, a portable terminal, a mobile communication terminal, a personal data assistant (PDA), a laptop computer, a smart phone, a net book, a television, a mobile internet device (MID), an ultra mobile PC (UMPC), a tablet PC, a desktop computer, a smart TV, a digital camera, a watch, a navigation device and an MP3 player. In addition, a wireless device may be any wireless device combining the functions of two or more of the above-described devices.

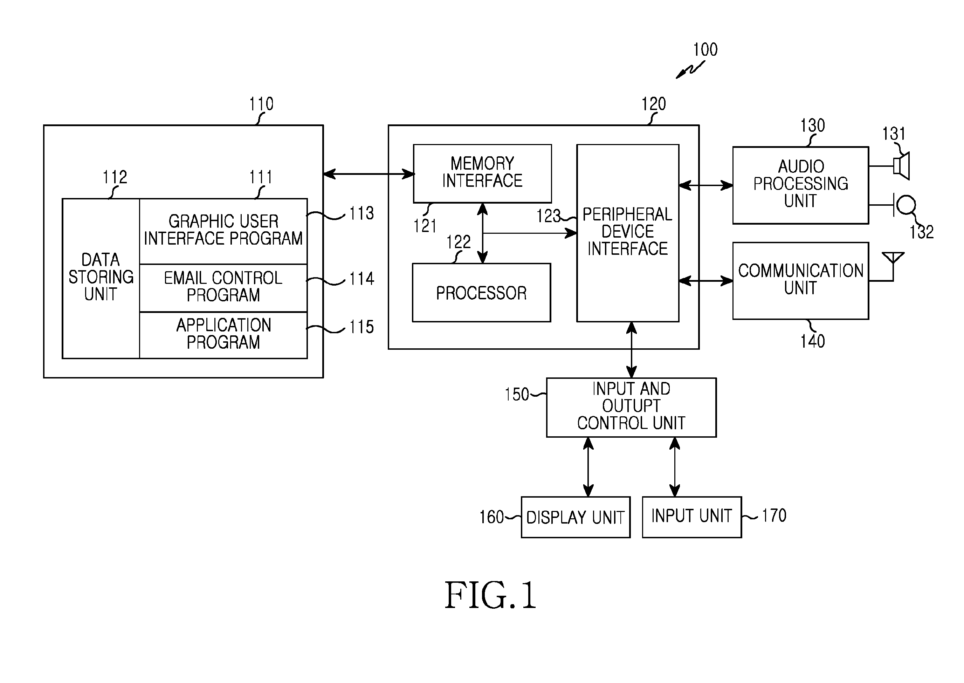

FIG. 1 is a block diagram of an electronic device according to the present invention. As shown in FIG. 1, an electronic device 100 includes a memory 110, a processor unit 120, an audio processing unit 130, a communication unit 140, an input and output control unit 150, a display unit 160, and an input unit 170. It should be noted that the electronic device may include a plurality of memories 110.

The memory 110 includes a program storing unit 111 that stores programs for controlling an operation of the electronic device 100, and a data storing unit 112 that stores data produced while executing the programs.

The program storing unit 111 may include a graphic user interface (GUI) program 113, an email control program 114, and at least one application program 115. The programs in the program storing unit 111 may be represented as a set of commands.

The GUI program 113 includes at least one software component for providing a user interface with graphics on the display unit 160. For example, the GUI program 113 may display a screen on the display unit 160 for configuring control information for email synchronization by the email control program 114 and email synchronization information estimated by the email control program 114.

The email control program 114 includes at least one software component for email synchronization with an email server through the communication unit 140. For example, the email control program 114 may configure control information for email synchronization with the email server (hereinafter, 'email configuration information'). In another embodiment, the email control program 114 may change the email configuration information according to change information provided from the input unit 170. The email configuration information includes at least one of an email account, a period for synchronizing emails, the number of emails to be downloaded, and an email capacity restriction.

In addition, the email control program 114 may estimate email synchronization information for email synchronization with the email server based on the email configuration information. For example, the email control program 114 may estimate the email synchronization information when configuring control information for email synchronization with the email server. In another embodiment, the email control program 114 may estimate email synchronization information when a period for email synchronization has begun. In another embodiment, the email control program 114 may also estimate email synchronization information when an email synchronization event occurs. The email synchronization information includes at least one of the number of emails, the amount of email data to download, and corresponding charges.

The application program 115 includes a software component for at least one application program that is installed in the electronic device 100.

The processor unit 120 includes a memory interface 121, at least one processor 122, and a peripheral device interface 123. The memory interface 121, the at least one processor 122, and the peripheral device interface 123 that are included in the processor unit may be implemented as at least one integrated circuit or as separate components.

The memory interface 121 controls an access to memory 110 by a component such as the processor 122 or the peripheral device interface 123.

The peripheral device interface 123 controls a connection of the input and output peripheral devices of the electronic device 100 to the processor 122 and the memory interface 121.

The processor 122 allows the electronic device 100 to provide various multimedia services by using at least one software program. The processor 122 executes at least one program stored in the memory 110 to provide a service corresponding to that program. For example, the processor 122 configures email configuration information executing the email control program 114 and estimates email synchronization information.

The audio processing unit 130 provides the audio interface between a user and the electronic device 100 through a speaker 131 and a microphone 132.

The communication unit 140 processes signals that are transmitted and received to and from the email server. In an embodiment of the present invention, the communication unit 140 may be divided into a plurality of communication sub-modules that support different communication networks. For example, the communication network includes a Global System for Mobile communication (GSM) network, an Enhanced Data rates for GSM Evolution (EDGE) network, a Code Division Multiple Access (CDMA) network, a Wideband CDMA (W-CDMA) network, a Long Term Evolution (LTE) network, an Orthogonal Frequency-Division Multiple Access (OFDMA) network, a wireless Local Area Network (LAN), a Bluetooth network, and a Near Field Communications (NFC) network, but it is not limited thereto.

The input and output control unit 150 provides the interface between the peripheral device interface 123 and an input and output unit such as the display unit 160 and the input unit 170.

The display unit 160 displays, for example, (a) the status information of the electronic device 100, (b) characters input by a user, (c) moving pictures and (d) still pictures. For example, the display unit 160 may display a screen for configuring email configuration information. As another example, the display unit 160 may also display email synchronization information that is estimated by the email control program 114.

The input unit 170 provides input data, produced by user selection, to the processor unit 120 through the input and output control unit 140. In this case, the input unit 170 may include a keypad that includes at least one hardware button, and a touch pad that senses a touch. For example, the input unit 170 may provide touch information by an electronic pen or a finger to the processor unit 120 through the input and output control unit 150, the touch information being sensed through the touch pad.

In the above-described embodiment, the processor 122 may execute software components stored in the program storing unit 111 in one module to synchronize with an email server.

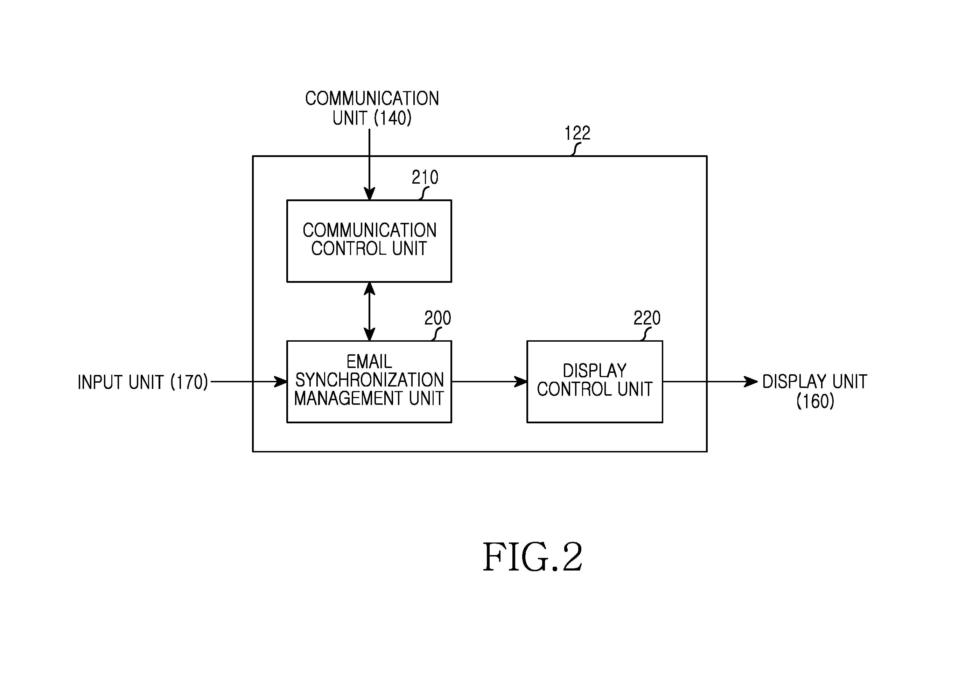

In another embodiment, the processor 122 may be configured to include the components for synchronizing with the email server in separate modules as shown in FIG. 2.

FIG. 2 is a detailed block diagram of a processor according to an embodiment of the present invention.

As shown in FIG. 2, the processor 122 may include an email synchronization management unit 200, a communication control unit 210, and a display control unit 220.

The email synchronization management unit 200 configures control information for email synchronization with an email server (i.e., email configuration information) to execute the email control program 114 stored in the program storing unit 111 to provide an email service by the electronic device 100. For example, when it is sensed from user input information provided through the input unit 170 that an email configuration menu is selected, the email synchronization management unit 200 may request the display unit 160, through the display control unit 220, to display an email configuration screen. Subsequently, the email synchronization management unit 200 may configure email configuration information by using input information sensed through the email configuration screen. The email configuration information may include at least one of an email account, a period for synchronizing emails, the number of emails to be downloaded, and an email capacity restriction.

In addition, the email synchronization management unit 200 executes the email control program 114 stored in the program storing unit 111 to estimate email synchronization information for email synchronization with an email server based on the email configuration information. For example, when configuring email configuration information, the email synchronization management unit 200 may estimate email synchronization information for email synchronization with the email server based on the email configuration information. In another embodiment, the email synchronization management unit 200 may estimate email synchronization information for email synchronization with the email server when a period for synchronizing emails based on the email configuration information has begun. In another embodiment, the email synchronization management unit 200 may also estimate email synchronization information when an email synchronization event occurs. The email synchronization management unit 200 may request the display unit 160, through the display control unit, to display the email synchronization information. The email synchronization information includes at least one of the number of emails, the amount of email data to download, and corresponding charges.

The communication control unit 210 controls signal reception and transmission from and to the email server through the communication unit 140. For example, the communication control unit 210 may transmit the email configuration information of the electronic device 100 to the email server through the communication unit 140. In another embodiment, when the email synchronization management unit 200 estimates email synchronization information, the communication control unit 210 may request the email server, through the communication unit 140, to provide email information for synchronization. Subsequently, the communication control unit 210 may provide the email information provided from the email server through the communication unit 140 to the email synchronization management unit 200. The email information may include the number of emails provided from the email server through email synchronization and the amount of email data therefrom. In another embodiment, the communication control unit 210 may also receive emails from the email server through the communication unit 140.

The display control unit 220 executes the GUI program 113 stored in the program storing unit 111 to display a user interface with graphics on the display unit 160. For example, the display control unit 220 may perform a control operation so that a screen for configuring email configuration information is displayed on the display unit 160 in response to a request from the email synchronization management unit 200. In another embodiment, the display control unit 220 may perform a control operation so that the email synchronization information estimated from the email synchronization management unit 200 is displayed on the display unit 160.

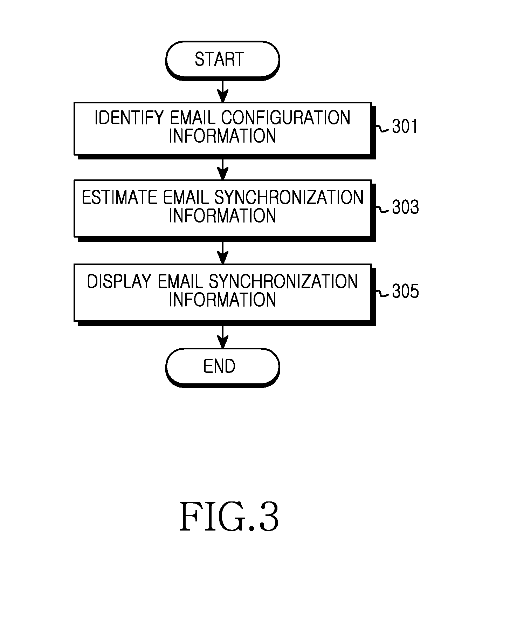

FIG. 3 is a flowchart for displaying estimated email synchronization information in an electronic device according to an embodiment of the present invention.

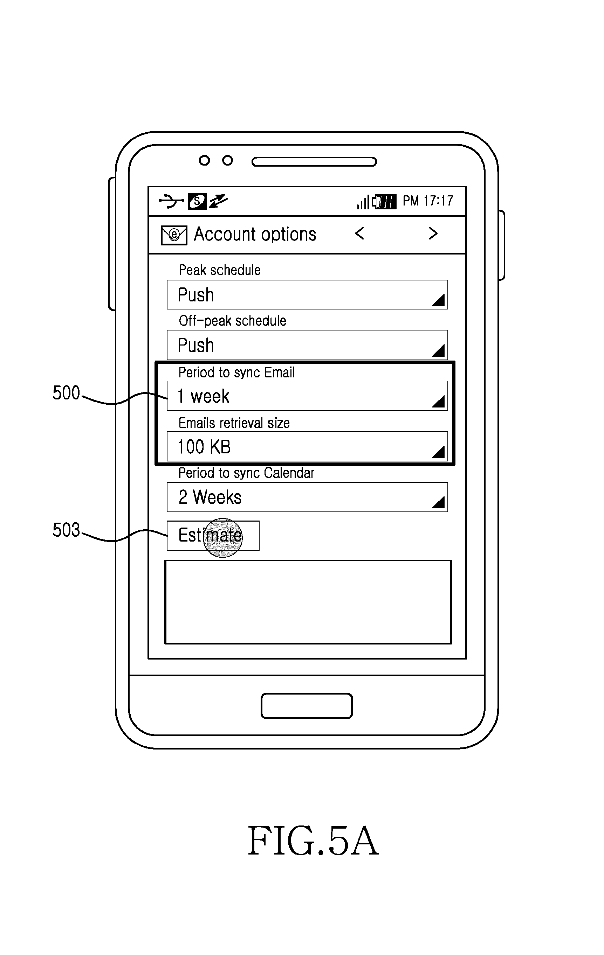

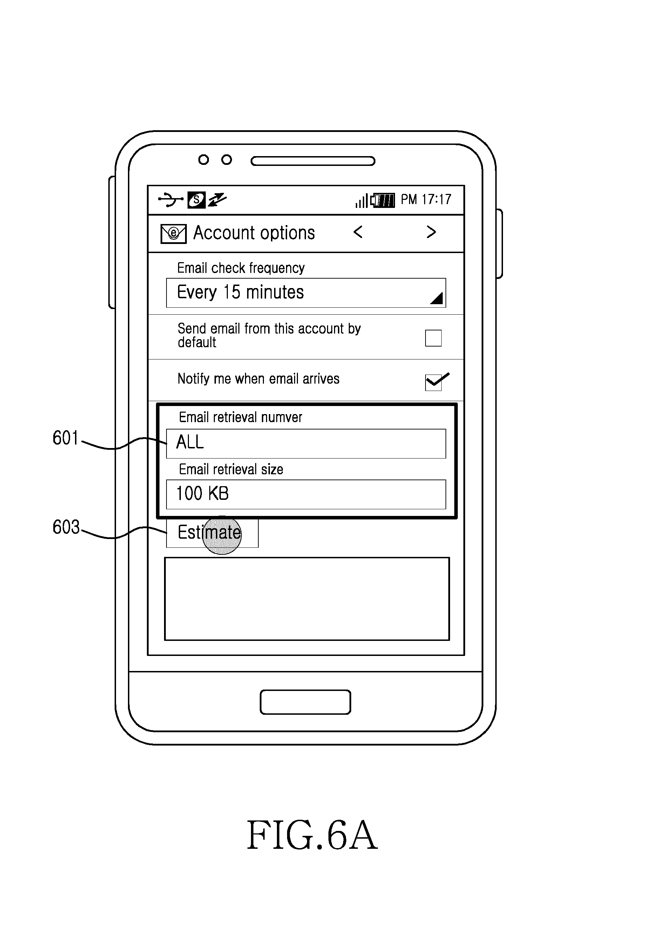

Referring to FIG. 3, an electronic device identifies email configuration information in step 301. For example, the electronic device may display an email configuration screen according to the Exchange ActiveSync (EAS) protocol on the display unit 160, as shown in FIG. 5A. Subsequently, the electronic device may recognize input information regarding an information item 500 corresponding to a synchronization period of the email configuration screen and to a capacity restriction of emails thereof, as the email configuration information. In another embodiment, the electronic device may display an email configuration screen according to the Internet Message Access Protocol/Post Office Protocol 3 (IMAP/POP3) protocol on the display unit 160, as shown in FIG. 6A. Subsequently, the electronic device may recognize input information regarding an information item 601 corresponding to the number of emails to be downloaded of the email configuration screen and to capacity restriction of emails thereof, as the email configuration information.

Subsequently, the electronic device proceeds to step 303 and estimates email synchronization information. For example, the electronic device may request the email server to provide email information and may thus identify synchronization information regarding at least one email to be provided from the email server through email synchronization. The email synchronization information may include at least one of the number of emails, the amount of email data to download, and corresponding charges.

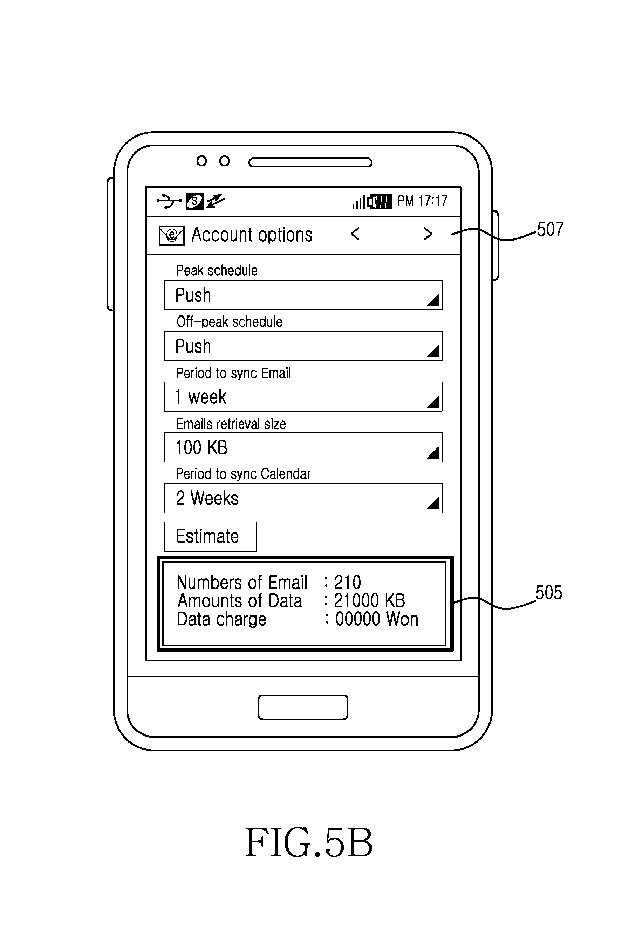

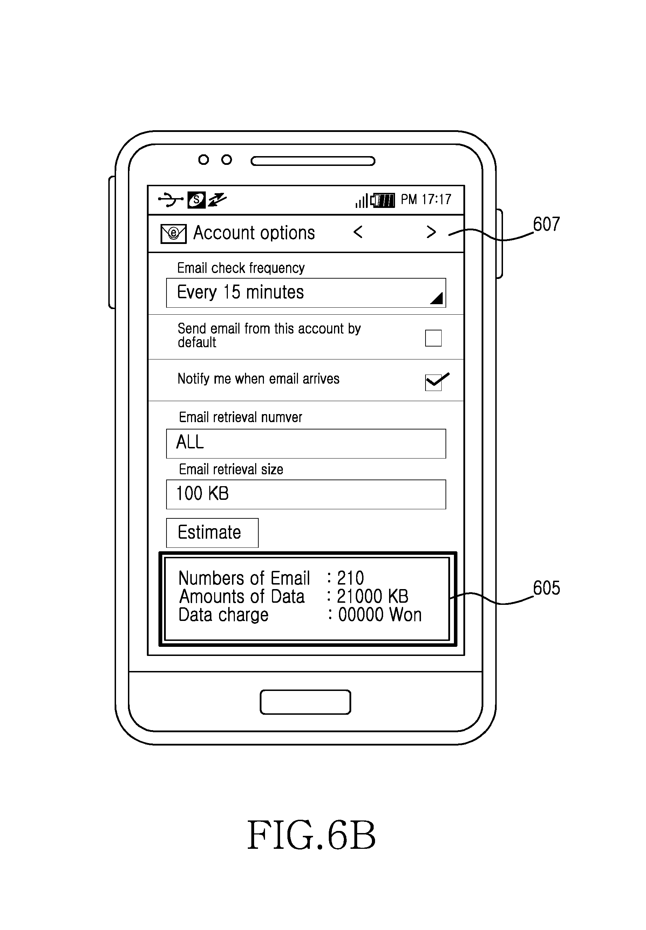

After estimating the email synchronization information, the electronic device proceeds to step 305 and displays the estimated email synchronization information on the display unit 160 so that a user may identify the information. For example, when the EAS protocol is used, the electronic device may display, on the display unit 160, estimated email synchronization information 505 that includes at least one of the number of emails to be downloaded from the email server, the amount of email data to download, and email synchronization charges, as shown in FIG. 5B. In another embodiment, when the IMAP/POP3 protocol is used, the electronic device may also display, on the display unit 160, estimated email synchronization information 605 that includes at least one of the number of emails to be downloaded from the email server, the amount of email data to download, and email synchronization charges, as shown in FIG. 6B.

Subsequently, the electronic device terminates this procedure.

In the above-described embodiment, the electronic device may display the estimated email synchronization information on preset display regions 505 and 605 as shown in FIGS. 5B and 6B, respectively.

In another embodiment, the electronic device may also display the estimated email synchronization information by using a popup window.

In addition, when the electronic device requests the email server to provide email information in the above-described embodiment, the email server may transmit the email synchronization information to the electronic device based on the email configuration information of the electronic device. Accordingly, the electronic device needs to transmit the email configuration information to the email server. For example, in the case of configuring email configuration information, the electronic device may transmit the email configuration information to the email server. In another embodiment, if the electronic device requests the email server to provide email information to estimate the email synchronization information, the electronic device may also transmit the email configuration information simultaneously with the request.

As described above, the electronic device may estimate and display the estimated email synchronization information on the display unit 160 so that a user may identify amounts of data and charges that are required for email synchronization. In this case, the electronic device may include a plurality of modules that respectively perform steps 301, 303, and 305 of displaying the estimated email synchronization information as shown in FIG. 3.

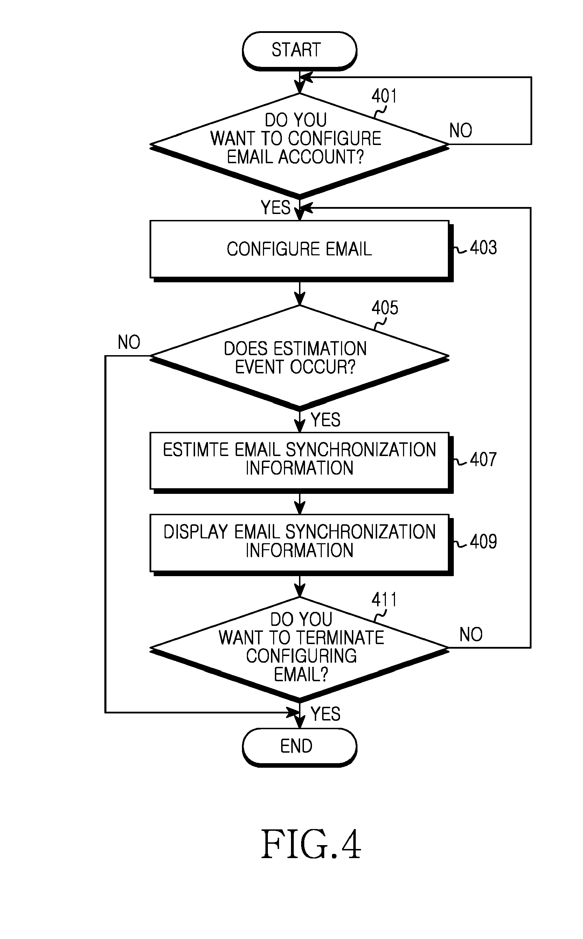

FIG. 4 is a flowchart for displaying estimated email synchronization information when configuring an email in an electronic device according to an embodiment of the present invention.

Referring to FIG. 4, the electronic device identifies whether to configure an email account in step 401. For example, the electronic device may identify, based on user input information provided through the input unit 170, whether an email configuration menu is selected. If it is detected that the email configuration menu is selected, the electronic device may recognize that an email account is to be configured.

If the email account is to be configured, the electronic device proceeds to step 403 and configures email configuration information. For example, if it is detected that the email configuration menu is selected, the electronic device may display an email configuration screen according to the EAS protocol as shown in FIG. 5A on the display unit 160. The electronic device may configure input information regarding an information item 500 corresponding to a synchronization period of the email configuration screen and to a capacity restriction of emails thereof, as the email configuration information. In another embodiment, if it is detected that the email configuration menu is selected, the electronic device may also display an email configuration screen according to the IMAP/POP3 protocol on the display unit 160 as shown in FIG. 6A. The electronic device may configure input information regarding an information item 601 corresponding to the number of emails to be downloaded of the email configuration screen and to a capacity restriction of emails thereof, as the email configuration information.

Subsequently, the electronic device proceeds to step 405 and detects whether an event of estimating email synchronization occurs. For example, the electronic device may identify on the email configuration screen (as shown in FIG. 5A) whether an input from an estimate button 503 is detected. In another embodiment, the electronic device may also identify on the email configuration screen (as shown in FIG. 6A) whether an input from an estimate button 603 is detected.

If the event of estimating the email synchronization does not occur, the electronic device terminates this procedure.

If the event of estimating the email synchronization occurs, the electronic device proceeds to step 407 and estimates the email synchronization information based on the email configuration information. For example, the electronic device may request the email server to provide email information and identify the email synchronization information to be provided from the email server through email synchronization.

After estimating the email synchronization information, the electronic device proceeds to step 409 and displays the estimated email synchronization information on the display unit 160 so that a user may identify the information. For example, when the EAS protocol is used, the electronic device may display, on the display unit 160, estimated email synchronization information 505 that includes at least one of the number of emails to be downloaded from the email server, the amount of email data to download, and email synchronization charges, as shown in FIG. 5B. In another embodiment, when the IMAP/POP3 protocol is used, the electronic device may also display, on the display unit 160, estimated email synchronization information 605 that includes at least one of the number of emails to be downloaded from the email server, the amount of email data to download, and email synchronization charges, as shown in FIG. 6B.

Subsequently, the electronic device proceeds to step 411 and identifies whether an operation to input the email configuration information is completed. For example, the electronic device may identify whether an input from the next button 507 for configuring another email service is detected on the email configuration screen as shown in FIG. 5B. In another embodiment, the electronic device may identify whether an input from the next button 607 for configuring another email service is detected on the email configuration screen as shown in FIG. 6B. If the input from the next button 507 or 607 is detected, the electronic device recognizes that the operation to input the email configuration information is completed.

If the operation to input the email configuration information is not completed, the electronic device proceeds to step 403 and re-configures email configuration information. For example, if an input from a control button for changing an email configuration is detected, the electronic device may recognize that the email configuration information is to be re-configured. In another embodiment, if a further input is detected, regarding an information item 500 related to a synchronization period and a capacity restriction of emails on the email configuration screen according to the EAS protocol, as shown in FIG. 5A, the electronic device may recognize that the email configuration information is to be re-configured. In another embodiment, if a further input is detected, regarding an information item 601 related to the number of emails to be downloaded and to a capacity restriction of emails on the email configuration screen according to the IMAP/POP3 protocol, as shown in FIG. 6A, the electronic device may recognize that the email configuration information is to be re-configured.

If the operation to input the email configuration information is completed, the electronic device terminates this procedure. The electronic device may download emails corresponding to a user account through email synchronization with the email server according to the email configuration information input in step 403.

As described above, the electronic device may transmit the email configuration information to the email server in order to receive the email synchronization information based on the email configuration information from the email server. For example, in the case of configuring email configuration information, the electronic device may transmit the email configuration information to the email server. In another embodiment, in the case of requesting the email server to provide email information in order to estimate the email synchronization information, the electronic device may also transmit the email configuration information simultaneously with the request.

If an input from the estimate button is detected in the above-described embodiment, the electronic device may estimate the email synchronization information based on the email configuration information.

In another embodiment, after identifying the email configuration information, the electronic device may also estimate the email synchronization information based on the email configuration information, regardless of whether an event of estimating the email synchronization information occurs.

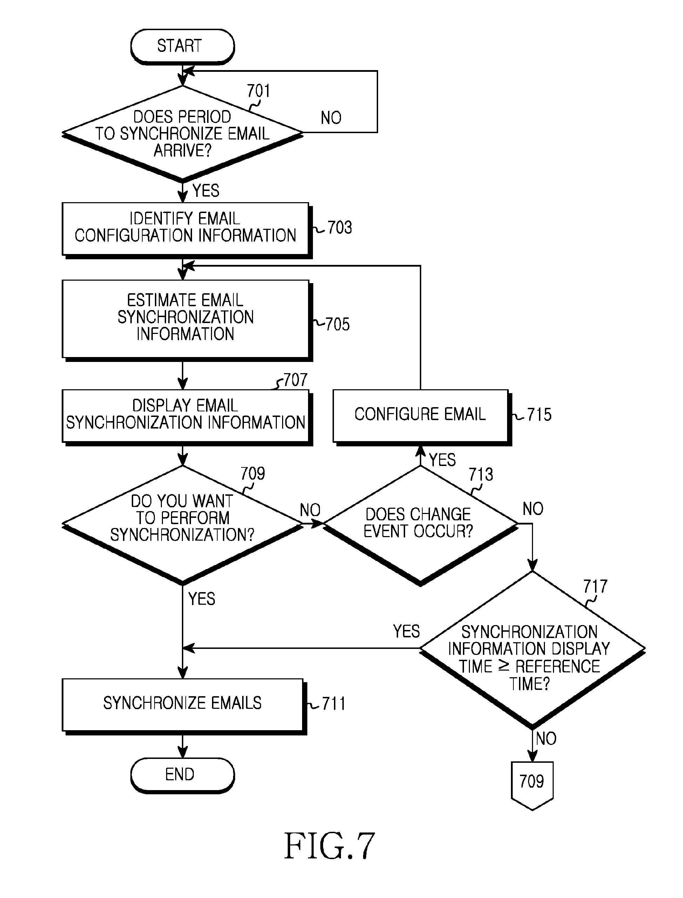

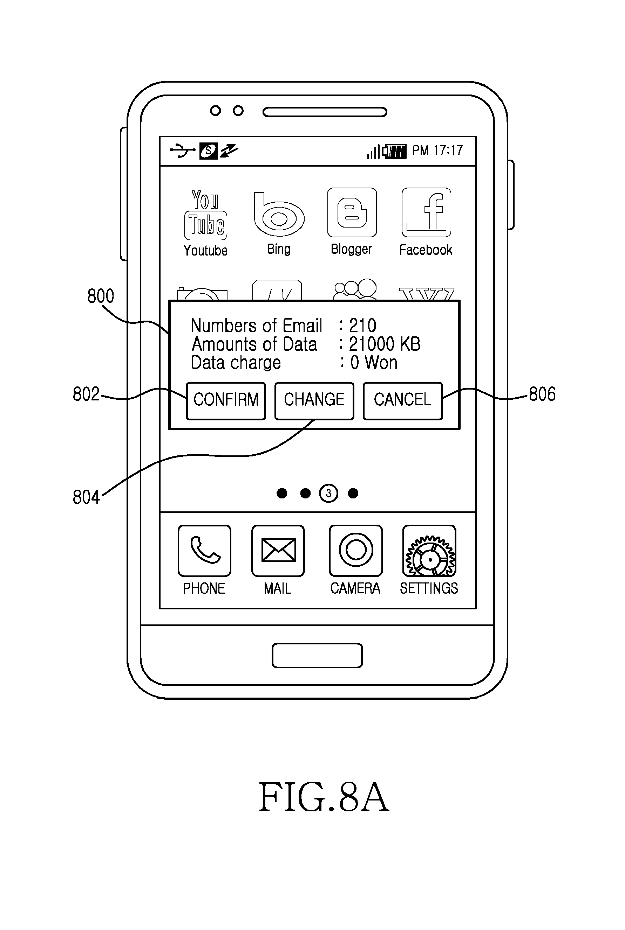

FIG. 7 is a flowchart for periodically displaying estimated email synchronization information in an electronic device according to an embodiment of the present invention. FIGS. 8A to 8C illustrate screens for periodically displaying email synchronization information in an electronic device according to an embodiment of the present invention.

Referring to FIG. 7, the electronic device detects based on the email configuration information configured for an email service in step 701 whether a period to synchronize emails has begun.

If the period to synchronize emails has begun, the electronic device proceeds to step 703 and identifies email configuration information. The email configuration information includes at least one of an email account, a period for synchronizing emails, the number of emails to be downloaded, and a capacity restriction of emails.

Subsequently, the electronic device proceeds to step 705 and estimates the email synchronization information based on the email configuration information. For example, the electronic device may request the email server to provide email information and identify the email synchronization information to be provided from the email server through email synchronization.

After estimating the email synchronization information, the electronic device proceeds to step 707 and displays estimated the email synchronization information on the display unit 160 so that a user may identify the information. For example, the electronic device may display, on the display unit 160, email synchronization information screen 800 that includes at least one of the number of emails to be downloaded from the email server, the amount of email data to download, and email synchronization charges, as shown in FIG. 8A.

Subsequently, the electronic device proceeds to step 709 and detects whether an event of performing synchronization occurs. For example, the electronic device may identify whether an input from a confirm button 802 is detected on the email synchronization information screen 800 shown in FIG. 8A.

If the event of performing the synchronization occurs, the electronic device proceeds to step 711 and downloads emails corresponding to a user account through email synchronization with the email server according to the email configuration information.

If the event of performing the synchronization does not occur, the electronic device proceeds to step 713 and detect whether an event of changing an email configuration occurs. For example, the electronic device may identify whether an input from a change button 804 is detected on the email synchronization information screen 800 shown in FIG. 8A.

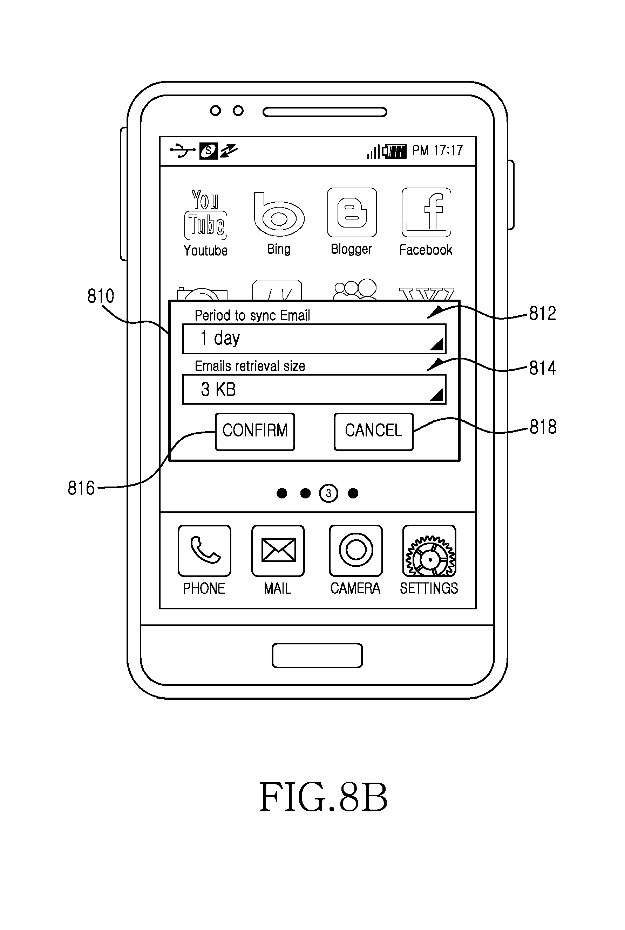

If the event of changing the email configuration occurs, the electronic device proceeds to step 715 and re-configures email configuration information. For example, if the event of changing the email configuration occurs, the electronic device may display an email configuration change screen 810 on the display unit 160, as shown in FIG. 8B. The electronic device recognizes input information regarding a synchronization period field 812 and an email capacity restriction field 814 on the email configuration change screen 810, as changed email configuration information.

After re-configuring the email configuration information, the electronic device proceeds to step 705 and re-estimates email synchronization information based on the changed email configuration information. For example, if an input from the confirm button 816 is detected on the email configuration change screen 810, the electronic device may recognize that an operation to input the email configuration information is completed. The electronic device re-estimates the email synchronization information based on the changed email configuration information. If an input from a cancel button 818 is detected on the email configuration change screen 810, the electronic device recognizes that an operation to input the email configuration information is completed. In this case, the electronic device may proceed to step 707 and continue to display the email synchronization information.

If the event of changing the email configuration does not occur in step 713, the electronic device proceeds to step 717 and compares an email synchronization information display time with a reference time. The reference time indicates a time to automatically perform email synchronization by the electronic device.

If the email synchronization information display time is less than the reference time, the electronic device recognizes that the time to automatically perform the email synchronization has not arrived. Accordingly, the electronic device proceeds to step 709 and detects whether the event of performing the synchronization occurs.

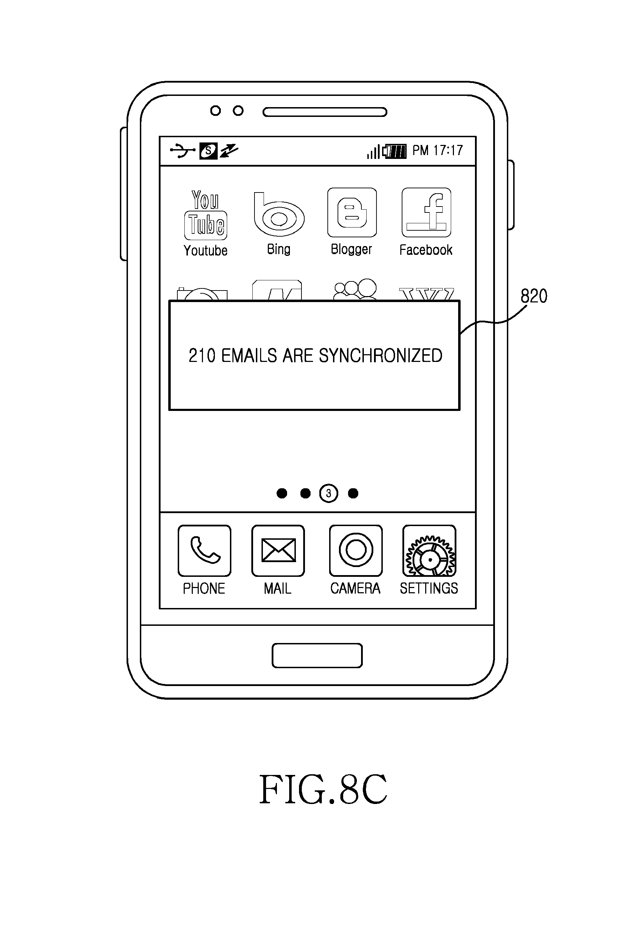

If the email synchronization information display time is greater than or equal to the reference time, the electronic device recognizes that the time to automatically perform the email synchronization has arrived. Accordingly, the electronic device proceeds to step 711 and downloads emails corresponding to a user account through the email synchronization with the email server according to the email configuration information. The electronic device may also display email synchronization completion information screen 820 on the display unit 160, as shown in FIG. 8C.

Subsequently, the electronic device terminates this procedure.

After estimating email synchronization information in the above-described embodiment, the electronic device may display the estimated email synchronization information 800 on the display unit as shown in FIG. 8A. In this case, if an input from the cancel button 806 is detected on the email synchronization information screen 800, the electronic device may also cancel periodic email synchronization.

As described above, if the email configuration information is changed by a user at a periodic email synchronization time, the electronic device may re-estimate the email synchronization information by using the changed email configuration information. For example, the electronic device may request the email server to provide the changed email information and identify email synchronization information to be provided from the email server through email synchronization. That is, the email server may transmit the email synchronization information to the electronic device as a function of the changed email configuration information of the electronic device in response to a request for email information from the electronic device. Accordingly, the electronic device transmits the changed email configuration information in step 715, to the email server. The electronic device may re-configure the email configuration information and then transmit the re-configured email configuration information to the email server, in step 715. When requesting the email server to provide email information in order to estimate the email synchronization information, the electronic device may also transmit the re-configured email configuration information simultaneously with the request.

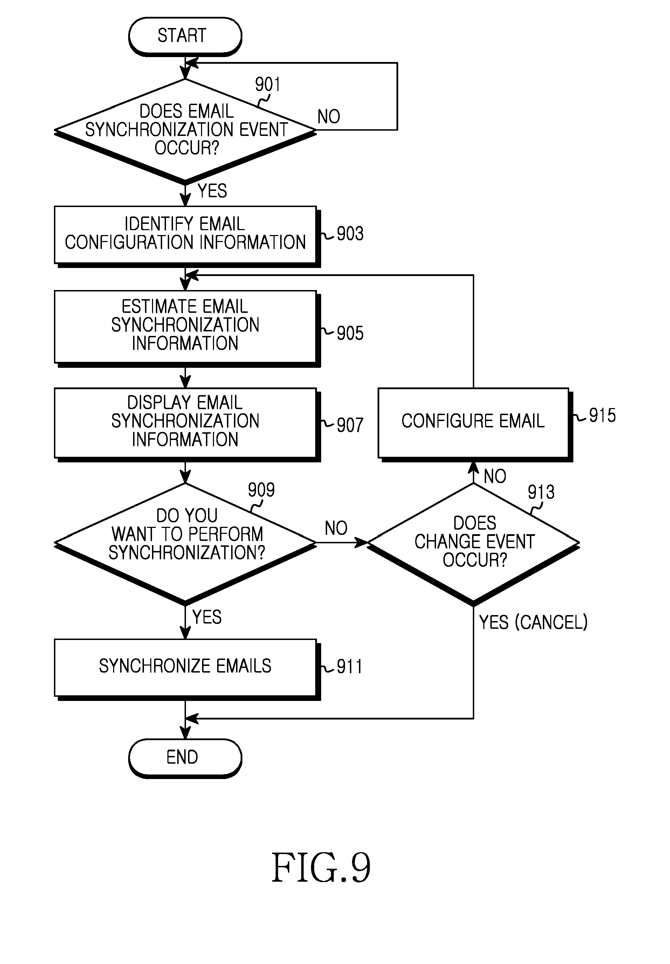

FIG. 9 is a flowchart for displaying estimated email synchronization information when a synchronization event occurs in an electronic device according to an embodiment of the present invention.

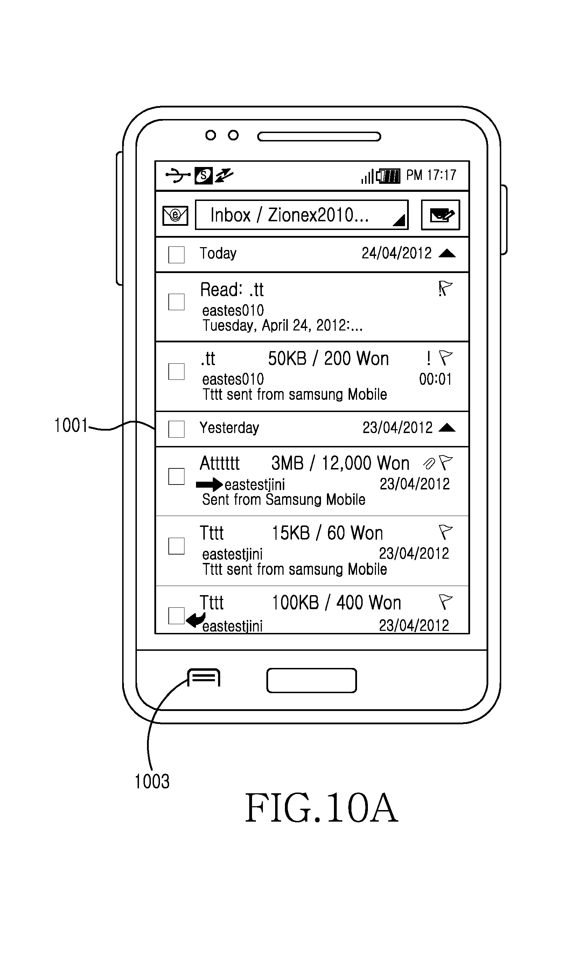

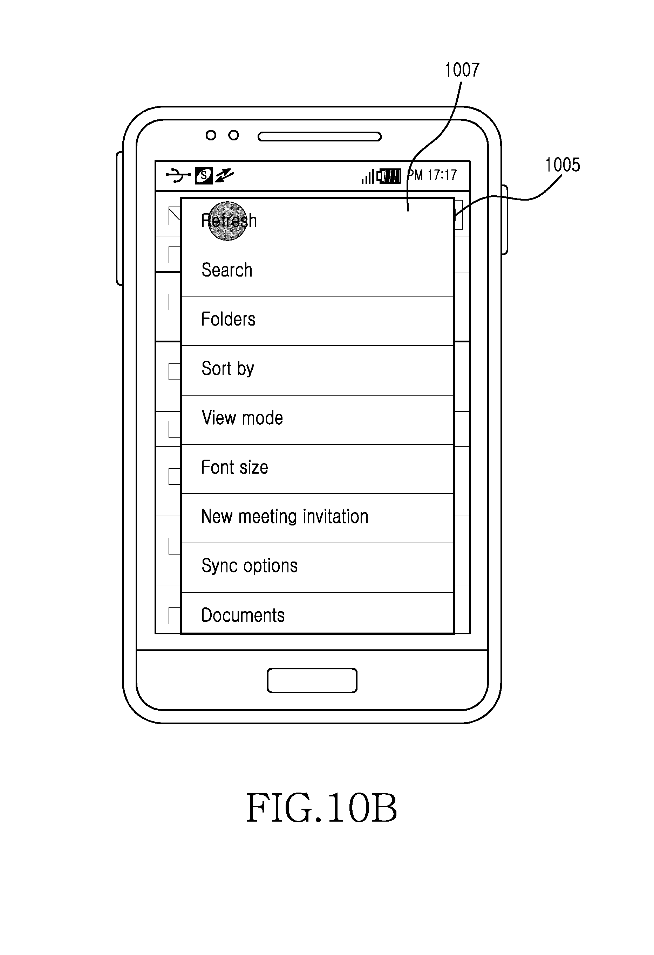

Referring to FIG. 9, in step 901, the electronic device detect whether an email synchronization event occurs. For example, if an input from a menu button 1003 is detected on an email list 1001 as shown in FIG. 10A, the electronic device may display a menu list as shown in FIG. 10B. The electronic device identifies whether an input from a synchronization button (refresh button) 1007 for email synchronization is detected on the menu list 1005 as shown in FIG. 10B.

If the email synchronization event occurs, the electronic device proceeds to step 903 and identifies email configuration information. The email configuration information includes at least one of an email account, a period for synchronizing emails, the number of emails to be downloaded, and a capacity restriction of emails.

Subsequently, the electronic device proceeds to step 905 and estimates the email synchronization information based on the email configuration information. For example, the electronic device may request the email server to provide email information and identify the email synchronization information to be provided from the email server through email synchronization.

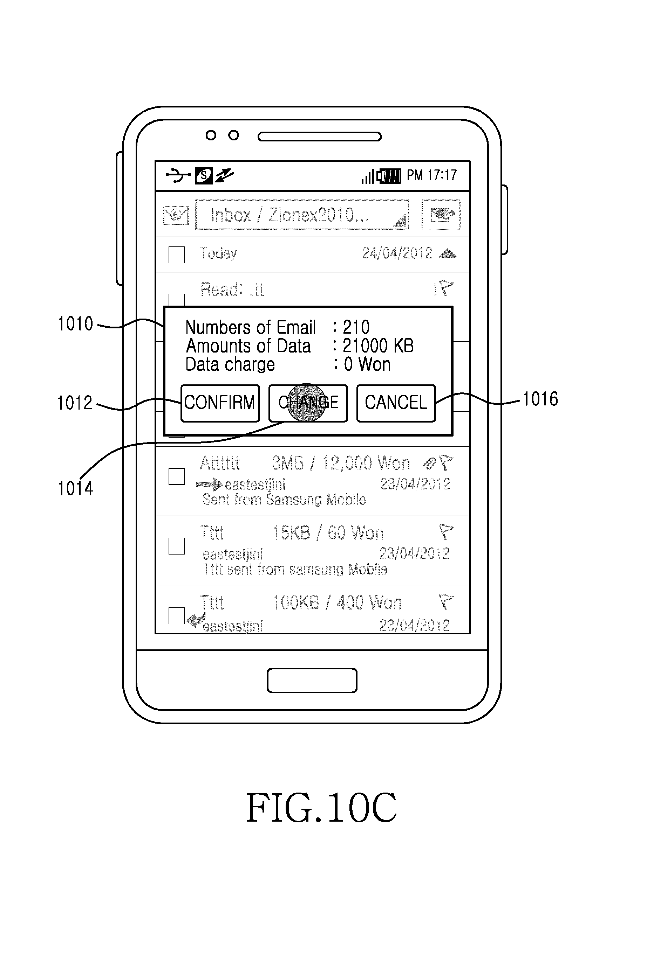

After estimating the email synchronization information, the electronic device proceeds to step 907 and displays the estimated email synchronization information on the display unit 160 so that a user may identify the information. For example, the electronic device may display, on the display unit 160, email synchronization information screen 1010 that includes at least one of the number of emails to be downloaded from the email server, the amount of email data to download, and email synchronization charges, as shown in FIG. 10C.

Subsequently, the electronic device proceeds to step 909 and detects whether an event of performing synchronization occurs. For example, the electronic device may identify whether an input from a confirm button 1012 is detected on the email synchronization information screen 1010 as shown in FIG. 10C.

If the event of performing the synchronization occurs, the electronic device proceeds to step 911 and downloads emails corresponding to a user account through email synchronization with the email server according to the email configuration information.

If the event of performing the synchronization does not occur, the electronic device proceeds to step 913 and detects whether an event of changing an email configuration occurs. For example, the electronic device may identify whether an input from a change button 1014 is detected on the email synchronization information screen 1010 as shown in FIG. 10C.

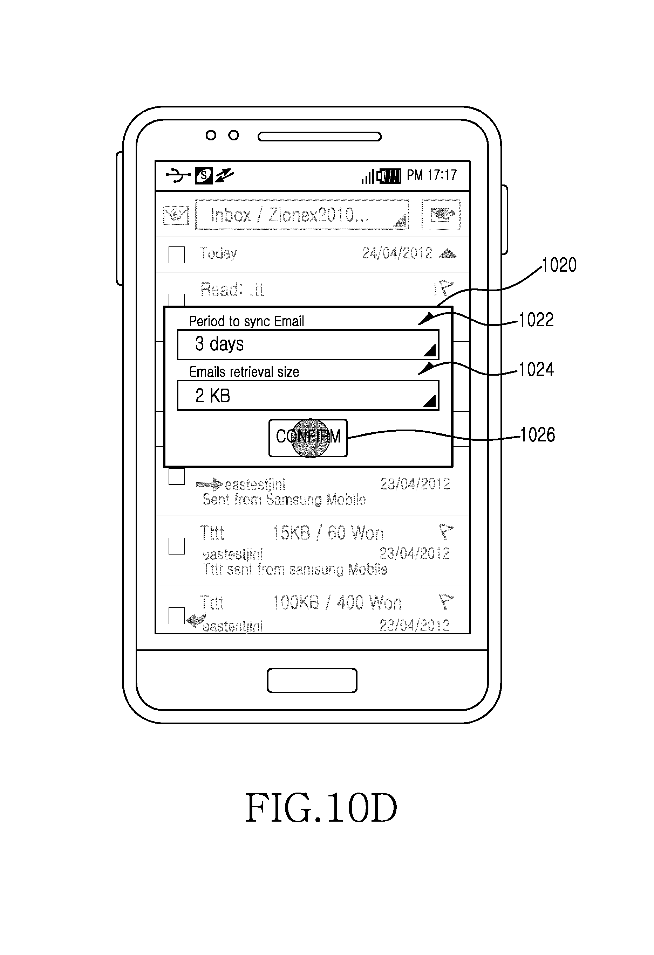

If the event of changing the email configuration occurs, the electronic device proceeds to step 915 and re-configures email configuration information. For example, if the event of changing the email configuration occurs, the electronic device may display an email configuration change screen 1020 on the display unit 160, as shown in FIG. 10D. The electronic device recognizes input information regarding a synchronization period field 1022 and an email capacity restriction field 1024 on the email configuration change screen 1020, as changed email configuration information.

After re-configuring the email configuration information, the electronic device proceeds to step 905 and re-estimates email synchronization information based on the changed email configuration information. For example, if an input from the confirm button 1026 is detected on the email configuration change screen 1020, as shown in FIG. 10D, the electronic device may recognize that an operation to input the email configuration information is completed. The electronic device re-estimates the email synchronization information based on the changed email configuration information.

If an event of canceling email synchronization occurs in step 913, the electronic device recognizes that email synchronization is not performed. Accordingly, the electronic device ends this procedure. For example, if an input from a cancel button 1016 is sensed on the email synchronization information screen 1010 shown on FIG. 10C, the electronic device may recognize that the event of canceling the email synchronization occurs.

As described above, if the email configuration information is changed by a user, the electronic device may re-estimate the email synchronization information by using the changed email configuration information. For example, the electronic device may request the email server to provide the changed email information and identify email synchronization information to be provided from the email server through email synchronization. That is, the email server transmits the email synchronization information to the electronic device as a function of the changed email configuration information of the electronic device in response to a request for email information from the electronic device. Accordingly, the electronic device transmits the changed email configuration information, in step 915, to the email server. The electronic device may re-configure the email configuration information and then transmit the re-configured email configuration information to the email server, in step 915. When requesting the email server to provide email information in order to estimate the email synchronization information, the electronic device may also transmit the re-configured email configuration information simultaneously with the request.

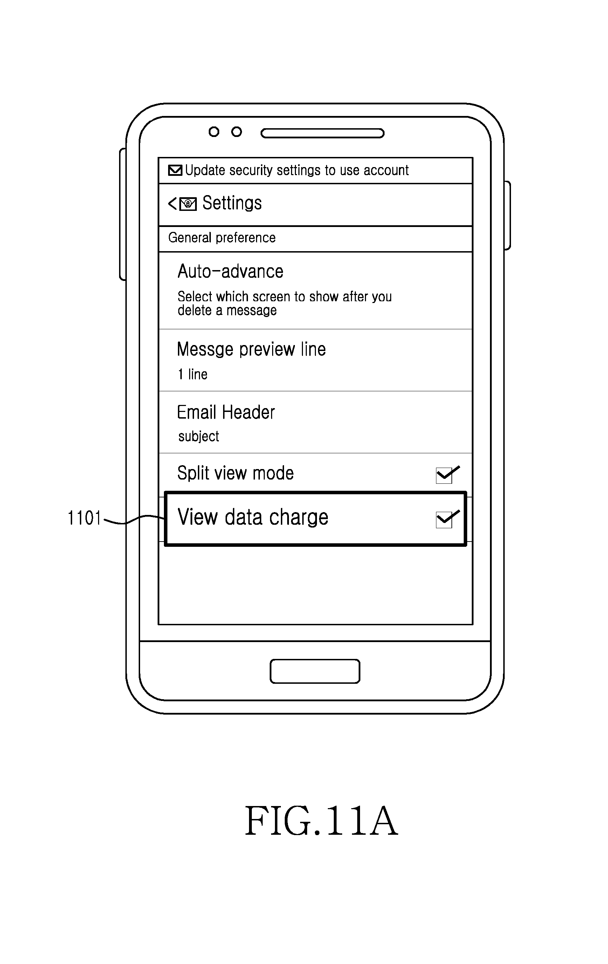

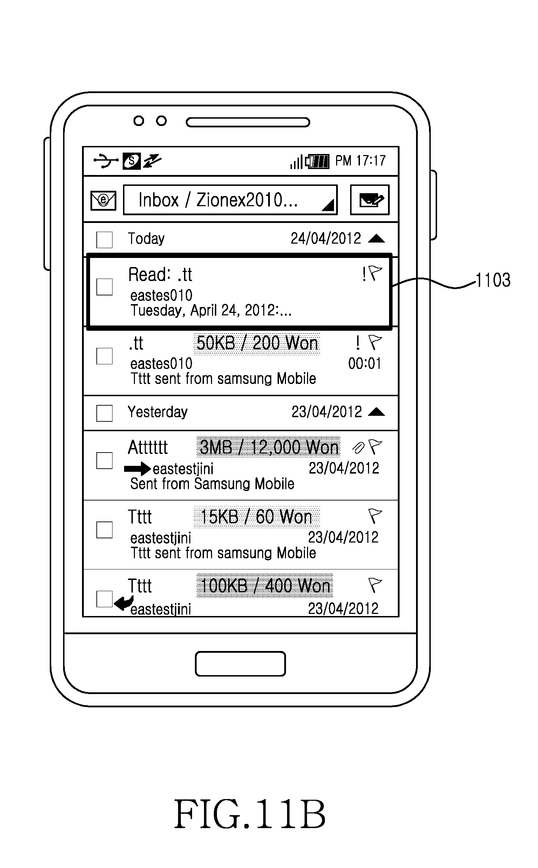

As described above, the electronic device performs email synchronization with the email server based on the email configuration information configured by a user and downloads emails corresponding to a user account from the email server. If the electronic device restricts email capacity according to the email configuration information, it may download only partial data of an email depending on a size of an email. In this case, if a user of the electronic device selects the email that includes only partially downloaded data, the electronic device downloads the rest of the data of that email through email synchronization with the email server. Accordingly, the electronic device may display at least one of an amount of further data of each email and a charge thereof in order to reduce unnecessary data consumption and charges. For example, a further data display menu 1101 is configured on an email configuration menu as shown in FIG. 11A. The electronic device may display the amount of further data and charges according to the amount of further data on each email in the email list as shown in FIG. 11B. In this case, if there is no further data like a first email 1103 in the email list as shown in FIG. 11B, because the whole data of an email is downloaded, the electronic device may not include amounts of further data and charges according to amounts of further data regarding that email 1103.

As described above, it is possible for the electronic device to estimate and display amounts of data and charges for email synchronization to apprise a user of such information.

In addition, it is possible for a user of the electronic device to correctly recognize amounts of data and charges according to email synchronization and thus easily change email configuration information for the email synchronization.

It will be appreciated that embodiments of the present invention according to the claims and description in the present invention can be realized in the form of hardware, software or a combination of hardware and software. Any such software may be stored in a non-transient computer readable storage medium. The non-transient computer readable storage medium stores one or more programs (software modules), the one or more programs comprising instructions, which when executed by one or more processors in the electronic device, cause the electronic device to perform a method of the present invention. Any such software may be stored in the form of volatile or non-volatile storage such as, for example, a storage device like a Read Only Memory (ROM), whether erasable or rewritable or not, or in the form of memory such as, for example, Read-Access Memory (RAM), memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments of the present invention provide a program comprising code for implementing an apparatus or a method as claimed in any one of the claims of the present invention and a machine-readable storage storing such a program. Still further, such programs may be conveyed electronically via any medium such as a communication signal carried over a wired or wireless connection and embodiments of the present invention suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, w here the indefinite article is used, the specification is to be understood as cont emplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While particular embodiments have been described in the detailed description of the present invention, variations may be made without departing from the scope of the present invention. Therefore, the scope of the present invention should not be limited to the above-described embodiments but be defined by the following claims.

## Claims

1. A method performed by an electronic device, the method comprising:
identifying configuration information for synchronizing emails;
identifying email information to be provided from an email server through email synchronization based on the configuration information; and
displaying the email information.

2. The method of claim 2, wherein the configuration information comprises at least one of an email account, a period for synchronizing emails, a maximum number of emails to be downloaded, and an email capacity restriction.

3. The method of claim 1 or claim 2, wherein the estimated email information includes at least one of a number of emails to be provided from the email server, an amount of email data to download, and charges corresponding to downloading the emails.

4. The method of any one of the preceding claims, wherein identifying email information comprises estimating email information when synchronizing the emails based on the configuration information.

5. The method of any one of the preceding claims, further comprising, after displaying the email information, downloading at least one email from the email server through email synchronization with the email server.

6. The method of claim 5, further comprising displaying the at least one email downloaded from the email server, along with at least one of an amount of data and a charge required for synchronizing each email.

7. The method of any one of the preceding claims, further comprising displaying, on a display unit, a service configuration screen for configuring an email account for email synchronization;
wherein identifying email information comprises identifying the configuration information input through the service configuration screen.

8. The method of any one of claims 1 to 6, wherein identifying email information comprises estimating the email information to be provided from the email server through email synchronization based on the configuration information, if an estimation event occurs.

9. The method of any one of the preceding claims, further comprising:
detecting whether a period for synchronizing emails has begun, and
identifying the configuration information for synchronizing the emails if the period to synchronize emails has begun.

10. The method of any one of the preceding claims, further comprising:
changing the configuration information for synchronizing the emails, if an event of changing a configuration occurs after the displaying of the email information.

11. The method of any one of the preceding claims, further comprising:
downloading at least one email from the email server through email synchronization with the email server, if the email information is displayed for a predetermined amount of time after displaying the email information.

12. An electronic device, comprising:
a display unit; and
a processor;
wherein the processor is arranged to:
identify configuration information for synchronizing emails;
identify email information to be provided from an email server through email synchronization based on the configuration information; and
control the display unit to display the email information.

13. The electronic device of claim 12, wherein the processor is further arranged to implement the method any one of claims 2 to 11.
